# EUROPEAN PATENT APPLICATION

(11) **EP 3 236 187 A1**
(43) Date of publication of application: **25.10.2017**
(21) Application number: 16166146.7
(22) Date of filing: 20.04.2016
(51) Int. Cl.: F28F 1/42, F28F 13/12, F25B 41/00, F25D 3/00

(54) **COLD STORAGE ELEMENT AND METHOD FOR COOLING THEREOF**

(71) Applicant: Air Liquide Deutschland GmbH, 40235 Düsseldorf (DE); L'AIR LIQUIDE, Société Anonyme pour l'Etude et l'Exploitation des Procédés Georges Claude, 75007 Paris (FR)
(72) Inventor: Böckling, Matthias, 47809 Krefeld (DE); Kinghorst, Fabian, 47228 Duisburg (DE); Brouns, Marcel, 47906 Kempen (DE); Lürken, Dr., Franz, 47906 Kempen (DE)
(74) Representative: Heine, Christian Klaus

(57) **Abstract**

Cold storage element (1) comprising at least a casing (2), which is at least partly filled with a cooling material (6), and a conduit (3) for guiding a refrigerant from an inlet (4) through the cooling material (6) to an outlet (5), wherein at least one cooling rib (7) is thermally connected to an outside (13) of the conduit (3), and wherein the conduit (3) comprises at least one turbulator element (8) at an inside (12) for inducing turbulences in a flow of the refrigerant within the conduit (3).

A cold storage element is provided that can be used, e.g., for a transport box for food products and that can be cooled fast and energy efficiently.

## Description

The present invention is directed to a cold storage element for cooling, in particular, transport boxes for food products. Further, the invention also relates to a method for cooling the cold storage element.

In prior art various cooling boxes and various methods and devices for cooling the same are known. In particular, cold storage elements with eutectic materials are known. Therein, the eutectic material provides an active cooling of, for example, food products stored in a cooling box. Thereby, the cooling box can be used independently of external cold generators such as air conditioning systems. The eutectic material is conveniently included within the cooling box in such a way that the eutectic material is retained within an isolating casing of the cooling box. Cooling the eutectic material, that is initializing the cold storage element for usage, is usually obtained by affecting the eutectic material externally. This may be done, for example, by actively driving a refrigerant through a conduit within the eutectic material. Therein, the cool down process is often found to be slow and non-uniform. That is, cooling of the cold storage element cannot be done efficiently. Not only is this time consuming, but it also requires an unnecessary large amount of refrigerant and energy. Further, conduits used in prior art have the disadvantage of having a low thermal conductivity. This further decreases the efficiency of the cooling of the cold storage element. In addition, gas bubbles within a liquid refrigerant in the conduit can further reduce the efficiency, in particular because a gas has a significantly lower thermal conductivity than a liquid.

It is, therefore, an object of the present invention to overcome at least in part the disadvantages known from prior art and in particular to provide a cold storage element and a method for cooling thereof allowing an efficient cooling.

These objects are solved by the features of the independent claims. Dependent claims are directed to preferred embodiments of the present invention.

The cold storage element according to the present invention comprises at least:
- a casing, which is at least partly filled with a cooling material, and
- a conduit for guiding a refrigerant from an inlet through the cooling material to an outlet, wherein at least one cooling rib is thermally connected to an outside of the conduit, and wherein the conduit comprises at least one turbulator element at an inside for inducing turbulences in a flow of the refrigerant within the conduit.

The casing preferably has a shape and size that are adapted to the respective purpose e. g. being inserted into or attached to a cooling box. Preferably, the casing is cuboid. It is further preferred that the cold storage element can be used as a cover for a cooling box. In that case, the casing has preferably a shape and size adapted to the respective cooling box. That is, in particular, the casing is preferably suitable for tightly closing the cooling box. The casing is preferably made at least in part with a plastic material. In particular, it is preferred that the casing is made of a material which can withstand low temperatures that are relevant in the context of refrigerants such as nitrogen. For example, liquid nitrogen has an equilibrium temperature of 77 K [Kelvin] at atmosphere pressure. Further, it is preferred that the casing material can be used in the context of food products, fulfilling respectively considerable hygiene requirements. In particular, the casing material is supposed be able to be exposed to a wet environment. Further, it is preferred that the casing is tight in a way that the cooling material may not leak out of the casing.

The latter could be disadvantageous if food products are stored next to a cold storage element.

The conduit is preferably a tube that is arranged within the cooling material. It is further preferred that the conduit is configured for guiding the refrigerant through all parts of the cooling material uniformly. That is, it is preferred, that the cooling material can be cooled at the same or almost the same cooling rate throughout the whole casing. In contrast, a non-uniform cooling could result in the cooling material being cooled down sufficiently in one part of the casing, while the cooling material in another part of the casing still requires further cooling. This, however, would be energy inefficient. Through the inlet an actively driven refrigerant flow can be let into the conduit. After having cooled the cooling material, the refrigerant can be let out of the conduit via the outlet. Preferably, liquid nitrogen is used as the refrigerant. Alternatively, it is preferred that carbon dioxide is used. However, any other refrigerant can be used that is suitable for providing a sufficiently low temperature within the cooling material.

The efficiency of the cooling is advantageously increased by the at least one cooling rib because due to the cooling rib the surface via which the exchange of energy is performed is increased. That is, due to the at least one cooling rib the relevant surface area of the conduit is increased. The cooling rib preferably comprises be a rod, a protrusion, a knob, a plate or the like. It is preferred that a plurality of cooling ribs is arranged at the outside of the conduit. It is particularly preferred that all cooling ribs have the same shape or cross section. Further, it is preferred that a spacing between two adjacent cooling ribs is the same for all cooling ribs. Thereby, a uniform cooling of the cooling material can be obtained.

Gas bubbles within the refrigerant flow through the conduit can be reduced by the at least one turbulator element. The turbulator element is preferably a structure at the inside of the conduit that can change the flow rate of the refrigerant locally and, hence, induce turbulences within the refrigerant. For example, the turbulator element can be a rib, a rod, a guide plate, a protrusion, a knob or the like. It is preferred that a plurality of turbulator elements is arranged at the inside of the turbulator. Further, it is preferred that all turbulator elements have the same shape. It is further preferred that all turbulator elements have the same spacing to adjacent turbulator elements. This can provide a uniform cooling of the cooling material.

In a preferred embodiment of the cold storage element the conduit comprises at least two straight segments, which are situated parallel to each other. Two adjacent straight segments are connected by a connecting segment.

It is preferred that the conduit comprises a plurality of straight segments. Particularly preferred are 3 to 10 straight segments, in particular 4 to 6. In case of a cuboid casing the straight segments are preferably arranged parallel to external walls of the casing. The straight segments preferably form the major part of the conduit, that is more than 50 % of a length of the conduit. The connecting elements are intended for guiding the refrigerant flow from one straight segment to the next one. The entity of straight segments and connecting segments preferably provides a continuous flow path for the refrigerant from the inlet to the outlet.

In a further preferred embodiment of the cold storage element the conduit and the at least one cooling rib consist at least partly of a metal.

As described above, cold temperatures as low as, e.g., 77 K may arise if using liquid nitrogen as the refrigerant or similar refrigerants like e. g. cryogenic gases. Hence, the material of the conduit and the at least one cooling rib preferably are able to withstand such low temperatures. Further, it is preferred that the conduit is tight in a way that the refrigerant and the cooling material remain separated from each other. In particular, this means that the refrigerant is not supposed to leak through the conduit material. A metal as the material for the conduit and the at least one cooling rib has the advantage that a metal usually has a significantly higher thermal conductivity compared with other materials. A high thermal conductivity of the material of the conduit and the at least one cooling rib is advantageous for an efficient cooling of the cooling material. Preferably, the metal is steel. Further, it is preferred that the cooling rib and the conduit are made with the same metal. This may facilitate the manufacture and avoids possible problems that could arise due to different thermal expansion behaviour.

In a further preferred embodiment of the cold storage element the cooling material is an eutectic material.

If any material is heated starting from a temperature below its melting point, it is necessary to provide an additional energy, the melting heat, to overcome the melting point. That is, even if the energy supply is continued after having reached the melting point, the temperature remains constant at the melting point for a certain time. Hence, a low melting point of the cooling material of the cold storage element is advantageous.

In general, an eutectic material is characterized in that it has a particularly low melting point. In material mixtures comprising two components, the specific composition having the lowest melting point is the eutectic composition.

According to a further aspect of the invention a method is provided for cooling the cooling material of a cold storage element. Therein, the refrigerant flow is actively driven through the conduit.

The details and advantages disclosed for the cold storage element according to the present invention can be applied to the method of the invention, and vice versa.

The refrigerant is preferably driven by a pump. Preferably, the refrigerant is provided from a refrigerant storage, wherein the refrigerant is stored at a low temperature. Further, it is preferred that the refrigerant flowing out of the outlet is recycled, that is cooled down and returned to the refrigerant storage. Thereby, costs for the refrigerant can be reduced. Alternatively, the refrigerant flowing out of the outlet is exhausted into the environment.

In a preferred embodiment of the method the refrigerant is initially liquid and evaporates at least in part while flowing through the conduit.

Preferably, the refrigerant is liquid nitrogen. As the refrigerant exchanges heat with the cooling material, the refrigerant temperature increases. This can include evaporation. However, it is preferred that the refrigerant is driven through the conduit at a rate that results in a uniform cooling of the cooling material. That is, it is preferred that the evaporation of the refrigerant mainly takes place close to the outlet of the conduit.

In a further preferred embodiment of the method turbulences in the refrigerant flow are induced by the at least one turbulator element.

Turbulences can, as described above, reduce gas bubbles within the refrigerant and, hence, increase cooling efficiency.

It should be noted that the individual features specified in the claims may be combined with one another in any desired technologically reasonable manner and form further embodiments of the invention. The specification, in particular in connection with the figures, explains the invention further and specifies particularly preferred embodiments of the invention. Particularly preferred variants of the invention and also the technical field will now be explained in more detail on the basis of the enclosed figures. It should be noted that the exemplary embodiments shown in the figures are not intended to restrict the invention. The figures are schematic and may not be to scale. The figures display:
- Fig. 1:: a schematic cross sectional view of a cold storage element, and
- Fig. 2:: a schematic cross sectional view of a segment of the conduit of the cold storage element from fig. 1.

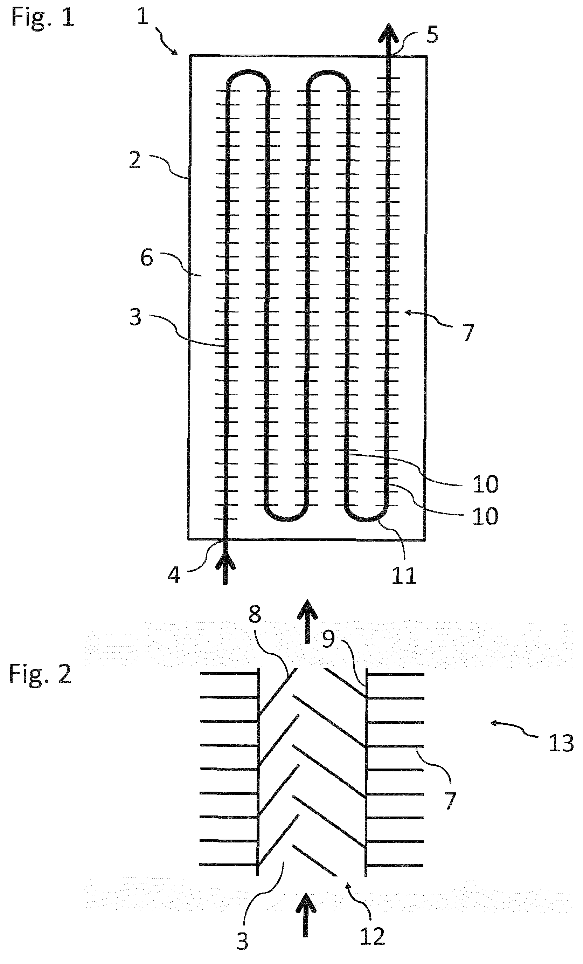

Fig. 1 shows a cold storage element 1 with a casing 2, in which a conduit 3 is arranged. The conduit 3 is configured for guiding a refrigerant from an inlet 4 to an outlet 5. The conduit 3 comprises straight segments 10, two adjacent of which being interconnected by connecting segments 11. Thereby, a continuous refrigerant flow path from the inlet 4 to the outlet 5 is provided by the conduit 3. The flow direction of the refrigerant flow is indicated by arrows. Further, the conduit comprises a plurality of cooling ribs 7 at its outside. The casing 2 is filled with a cooling material 6.

Fig. 2 shows a section of the conduit 3. Therein, at an inside 12 of the conduit 3 a plurality of turbulator elements 8 are attached to walls 9. At an outside 13 of the conduit 3 a plurality of cooling ribs 7 is shown. The flow direction of the refrigerant flow is indicated by arrows.

A cold storage element is provided that can be used, e.g., for a transport box for food products and that can be cooled fast and energy efficiently.

### List of reference numerals

- 1: cold storage element
- 2: casing
- 3: conduit
- 4: inlet
- 5: outlet
- 6: cooling material
- 7: cooling rib
- 8: turbulator element
- 9: wall
- 10: straight segment
- 11: connecting segment
- 12: inside
- 13: outside

## Claims

1. Cold storage element (1) comprising at least
- a casing (2), which is at least partly filled with a cooling material (6), and
- a conduit (3) for guiding a refrigerant from an inlet (4) through the cooling material (6) to an outlet (5), wherein at least one cooling rib (7) is thermally connected to an outside (13) of the conduit (3), and wherein the conduit (3) comprises at least one turbulator element (8) at an inside (12) for inducing turbulences in a flow of the refrigerant within the conduit (3).

2. Cold storage element (1) according to claim 1, wherein the conduit (3) comprises at least two straight segments (10), which are situated parallel to each other, and wherein two adjacent straight segments (10) are connected by a connecting segment (11).

3. Cold storage element (1) according to one of the preceding claims, wherein the conduit (3) and the at least one cooling rib (7) consist at least partly of a metal.

4. Cold storage element (1) according to one of the preceding claims, wherein the cooling material (6) is an eutectic material.

5. Method for cooling the cooling material (6) of a cold storage element (1) according to one of the previous claims, wherein the refrigerant flow is actively driven through the conduit (3).

6. Method according to claim 5, wherein the refrigerant is initially liquid and evaporates at least in part while flowing through the conduit (3).

7. Method according to one of claims 5 or 6, wherein turbulences in the refrigerant flow are induced by the at least one turbulator element (8).
